# EUROPÄISCHE PATENTANMELDUNG

(11) **EP 4 527 766 A1**
(43) Veröffentlichungstag der Anmeldung: **26.03.2025**
(21) Anmeldenummer: 24193103.9
(22) Anmeldetag: 06.08.2024
(51) Int. Cl.: B65G 47/82, B65G 47/84, B65B 35/40, B65B 59/00

(54) **TRANSPORTABSCHNITT UND VERFAHREN ZUM TRANSPORT VON MINDESTENS ZWEI NEBENEINANDER ANGEORDNETEN ARTIKELN**

(30) Priorität: 22.09.2023 DE 102023125757
(71) Anmelder: Krones Aktiengesellschaft, 93073 Neutraubling (DE)
(72) Erfinder: Dr. HENSEL, Thomas, 93073 Neutraubling (DE)
(74) Vertreter: Benninger Patentanwaltskanzlei

(57) **Zusammenfassung**

Es sind ein Transportabschnitt (1) und ein Verfahren zum Transport von mindestens zwei nebeneinander angeordneten Artikeln in einer Transportrichtung offenbart. Der Transportabschnitt (1) umfasst eine Transportfläche und mindestens ein Schubelement (15).

Das Schubelement (15) ist zur rückseitigen Anlage an die mindestens zwei nebeneinander angeordneten Artikel und zur Bewegung der mindestens zwei nebeneinander angeordneten Artikel (20) in Transportrichtung (50) ausgebildet. Das Schubelement (15) umfasst mindestens zwei unterschiedliche Kontaktbereiche (4) für die Artikel.

## Beschreibung

Die vorliegende Erfindung betrifft einen Transportabschnitt zum Transport von mindestens zwei nebeneinander angeordneten Artikeln in einer Transportrichtung sowie ein Verfahren zum Transport von mindestens zwei nebeneinander angeordneten Artikeln in einer Transportrichtung.

Bei der Handhabung und Verpackung von Artikeln werden diese oftmals zu Artikelgruppen mit einer Mehrzahl von regelmäßig aneinander stehenden Artikeln zusammengestellt, die anschließend mit einer Umverpackung, beispielsweise einer Schrumpffolie, einer Umreifung oder einer oberen Greifkartonverpackung zu Verpackungseinheiten bzw. Gebinden zusammengefasst und auf diese Weise für den späteren Transport und die Lagerung fest zusammengehalten werden.

Vor der Zusammenstellung als Artikelgruppen oder im Rahmen der Zusammenstellung der Artikelgruppen ist häufig ein Transport von Artikeln über einen Transportabschnitt vorgesehen, in welchem die Artikel mittels einer rückseitig an die Artikel anliegenden Schubstange beim Transport gehalten oder aktiv durch die rückseitig an die Artikel anliegenden Schubstange in eine Transportrichtung bewegt werden. Häufig umfasst ein solcher Transportabschnitt eine Überschubplatte, über welche die Artikel vermittels der rückseitig an die Artikel anliegenden Schubstange schiebend bewegt werden.

Die Schubstangen können hierbei einen Kontaktbereich mit einer Profilierung aufweisen. Beispielsweise werden gemäß der Offenbarung der Offenlegungsschrift DE 10 2010 033 549 A1 profilierte Schubstangen verwendet, um eine verdichtete bzw. genestete Anordnung zu verpackender, in Gruppen aufgeteilter, vorzugsweise mehrreihig hintereinander angeordneter Artikel auszubilden.

Herkömmlicherweise muss bei einer Produktionsumstellung in Abhängigkeit der Größe und/oder Form der Artikel die Schubstange ausgetauscht werden. Dies erfolgt in der Regel manuell und stellt einen zeitintensiven Vorgang, der zudem aufgrund des notwendigen Produktionsstillstands einen ungewünschten Kostenfaktor darstellt.

Eine Aufgabe der vorliegenden Erfindung besteht darin, die Nachteile des Stands der Technik zu beseitigen und insbesondere eine einfache und kostengünstige Lösung für eine Produktionsumstellung bei den genannten Transportaufgaben bereitzustellen.

Die obige Aufgabe wird durch einen Transportabschnitt und ein Verfahren zum Transport von mindestens zwei nebeneinander angeordneten Artikeln gelöst, welche die Merkmale in den unabhängigen Ansprüchen umfassen. Weitere vorteilhafte Ausgestaltungen werden durch die Unteransprüche beschrieben.

Die Erfindung sieht einen Transportabschnitt zum Transport von mindestens zwei nebeneinander angeordneten Artikeln in einer Transportrichtung vor. Der Transportabschnitt umfasst eine Transportfläche und mindestens ein Schubelement, welches Schubelement zur rückseitigen Anlage an die mindestens zwei nebeneinander angeordneten Artikel und zur Bewegung der mindestens zwei nebeneinander angeordneten Artikel in Transportrichtung ausgebildet ist.

Hierbei ist vorgesehen, dass das Schubelement mindestens zwei unterschiedliche Kontaktbereiche für die Artikel umfasst. Dadurch ist das Schubelement geeignet, unterschiedliche Artikel zu handhaben und insbesondere in Transportrichtung über die Transportfläche zu bewegen.

Bei den Artikeln handelt es sich vorzugsweise um Getränkebehälter, insbesondere um Flaschen aus PET oder einem anderen geeigneten Kunststoff oder auch Glas. Bevorzugt können die Artikel auch durch Dosen aus Kunststoff, Glas und/oder Aluminium oder einem anderen Metall o.ä. gebildet sein.

Bei den Artikeln kann es sich jedoch auch um andere Stückgüter handeln, beispielsweise um Artikelgruppen aus mindestens zwei Artikeln, welche mit einer Umverpackung zu Verpackungseinheiten bzw. Gebinden zusammengefasst sind o.ä.

Die Transportfläche wird beispielsweise durch eine Überschubplatte gebildet, auf welcher die Artikel vermittels des Schubelements in Transportrichtung angeschoben und insbesondere gleitend über die Transportfläche bewegt werden.

Ein erster Kontaktbereich ist für erste Artikel einer ersten Größe oder Form vorgesehen, insbesondere für erste Artikel mit einem ersten Durchmesser. Ein zweiter Kontaktbereich ist für zweite Artikel einer zweiten Größe oder Form vorgesehen, insbesondere für zweite Artikel mit einem zweiten Durchmesser. Das Schubelement kann optional weitere Kontaktbereiche für weitere Artikel vorsehen.

Vorzugsweise ist vorgesehen, dass das Schubelement mindestens zwei unterschiedliche Betriebspositionen einnehmen kann, wobei in einer ersten Betriebsposition ein erster Kontaktbereich der Schubstange den rückseitigen Anlagebereich für erste Artikel bildet und wobei in einer zweiten Betriebsposition ein zweiter Kontaktbereich den rückseitigen Anlagebereich für zweite Artikel bildet. In Abhängigkeit von der Anzahl der Kontaktbereiches des Schubelements kann dieses optional weitere Betriebspositionen einnehmen.

Insbesondere ist in der ersten Betriebsposition der erste Kontaktbereich des Schubelements dem zweiten Kontaktbereich des Schubelements und gegebenenfalls weiteren Kontaktbereichen des Schubelements in Transportrichtung vorauslaufend angeordnet.

Gemäß einer Ausführungsform ist vorgesehen, dass das Schubelement eine Längsachse aufweist und um die Längsachse drehbar gelagert ausgebildet ist. Insbesondere ist vorgesehen, dass das Schubelement durch eine Drehung um seine Längsachse von der ersten Betriebsposition in die zweite Betriebsposition und gegebenenfalls weitere Betriebspositionen gebracht werden kann und vice versa

Beispielsweise kann das Schubelement als Schubstange ausgebildet sein, wobei an der Außenmantelfläche der Schubstange zwei unterschiedliche, einander im Wesentlichen gegenüberliegende Kontaktbereiche ausgebildet sind. Durch eine um die Längsachse der Schubstange vorgenommene Drehung um (circa) 180° kann diese in die zwei unterschiedlichen Betriebspositionen gebracht werden.

Eine weitere Ausführungsform kann vorsehen, dass das Schubelement als Schubstange ausgebildet sein, wobei an der Außenmantelfläche der Schubstange drei unterschiedliche Kontaktbereiche ausgebildet sind. Durch eine um die Längsachse der Schubstange vorgenommene Drehung um jeweils (circa) 120° kann diese in die drei unterschiedlichen Betriebspositionen gebracht werden.

Eine weitere Ausführungsform kann vorsehen, dass das Schubelement als Schubstange ausgebildet sein, wobei an der Außenmantelfläche der Schubstange vier unterschiedliche Kontaktbereiche ausgebildet sind. Durch eine um die Längsachse der Schubstange vorgenommene Drehung um jeweils (circa) 90° kann diese in die vier unterschiedlichen Betriebspositionen gebracht werden.

Um die unterschiedlichen Betriebspositionen des Schubelements einzustellen, kann gemäß einer Ausführungsform vorgesehen sein, dass der Transportabschnitt mindestens ein Anschlagelement umfasst, welches mindestens eine Anschlagelement dazu ausgebildet ist, die Drehung des Schubelements zu bewirken, insbesondere welches mindestens eine Anschlagelement zustellbar ausgebildet ist.

Die Arbeitsweise des mindestens einen Anschlagelements wird nachfolgend anhand eines als Schubstange ausgebildeten Schubelements beschrieben, wobei vorzugsweise mehrere Schubstangen zwischen zwei parallel umlaufenden Antriebsketten angeordnet sind und über die Antriebsketten bewegt werden. Der Fachmann kann die nachfolgend beschriebene Ausführungsform auch auf anderweitig angetriebene Schubelemente übertragen. Wenn hier von Antriebsketten gesprochen wird, so sind diese als Konkretisierung von Zugmitteln gemeint. Es versteht sich für den Fachmann, dass grundsätzlich auch andere Zugmittel als Antriebsüberträger in Fragen kommen, so bspw. Antriebsriemen o. dgl. Zugmittel.

Befinden sich die Schubstangen im Bereich des Untertrums der Antriebsketten oder Zugmittel, so liegen diese vorzugsweise mit einer Kontaktfläche jeweils rückseitig an den Artikeln oder Artikelgruppen an und bewegen diese somit in Transportrichtung über die Transportfläche.

Wird aufgrund eines Produktwechsels die mindestens eine andere Kontaktfläche des Schubelements als rückseitige Anlagefläche benötigt, dann ist eine Verstellung eines oder mehrerer der zwischen den Antriebsketten oder Zugmittel angeordneten Schubelemente notwendig.

Auch kann im laufenden Produktionsbetrieb vorgesehen sein, dass beispielsweise abwechselnd unterschiedliche Artikel den Transportabschnitt durchlaufen und einer nachfolgenden Handhabung zugeführt werden.

Die Verstellung der Schubelemente erfolgt vorzugsweise bei der Rückführung der Schubelemente im Bereich des Obertrums der Antriebsketten oder Zugmittel, d.h. zu einem Zeitpunkt, an welchem sich das jeweilige Schubelement entgegen der Transportrichtung der Artikel bewegt und auch nicht in rückseitiger Anlage mit Artikeln steht.

Das mindestens eine Anschlagelemente ist dazu ausgebildet, das Schubelement oder die Schubelemente um seine/ihre Längsachse zu verdrehen und dadurch von einer ersten Betriebsposition in eine zweite oder eine weitere Betriebsposition zu überführen oder vice versa.

Eine Ausführungsform kann vorsehen, dass das mindestens eine Anschlagelement zumindest bereichsweise synchron mit dem jeweils zu verstellenden Schubelement entgegen der Transportrichtung bewegt wird.

Gemäß einer weiteren Ausführungsform ist vorgesehen, dass das mindestens eine Anschlagelement zu dem jeweils zu verstellenden Schubelement zustellbar ausgebildet sind. Somit erfolgt nicht bei jeder Rückführung der Schubelemente eine Drehung derselben um ihre Längsachse. Stattdessen wird das mindestens eine Anschlagelement zum Bewirken der Drehung nur zugestellt, um die Drehung eines jeweiligen Schubelements zu bewirken, wenn im Rahmen des laufenden Produktionsbetriebs unterschiedliche Artikel zu bearbeiten sind oder wenn im Rahmen eines Produktionswechsels die andere Kontaktfläche als rückseitige Anlagefläche benötigt wird.

Durch das Überführen der Schubelemente in die unterschiedlichen Betriebspositionen können unterschiedliche Artikel nacheinander bearbeitet werden, ohne dass ein Produktionsstopp aufgrund eines Formatteilwechsels notwendig ist. Dadurch ist ein sehr flexibler Produktionsmodus möglich, da die Artikel nicht mehr in regelmäßigen Abfolgen den Transportabschnitt durchlaufen müssen, sondern da nunmehr flexibel auf Änderungen in der Abfolge der Artikel reagiert werden kann.

In diesem Zusammenhang kann eine Ausführungsform vorsehen, dass dem Transportabschnitt ein Sensor für die ankommenden Artikel zugeordnet ist. Die durch den Sensor ermittelten Daten zu den Artikeln werden an eine Steuerungseinrichtung des Transportabschnitts oder an eine mit dem Transportabschnitt wirkverbundene Steuerungseinrichtung übermittelt, die die Daten auswertet und bei einer Änderung der zugeführten Artikel bzw. Produkte das mindestens eine Anschlagelement ansteuert, um das entsprechende Schubelement in die notwendige Betriebsposition zu verbringen.

Eine alternative Ausführungsform kann vorsehen, dass die Drehung des Schubelements um seine Längsachse durch einen Antrieb bewirkt wird, welcher beispielsweise durch einen an der als Drehachse ausgebildeten Längsachse angeordneten Servormotor o.ä. gebildet wird. Wahlweise kann ein solcher Servomotor auch über ein Getriebe mit der Drehachse gekoppelt sein, bspw. über ein Zugmittelgetriebe o. dgl.

Eine weitere alternative Ausführungsform kann vorsehen, dass die Drehung des Schubelements um seine Längsachse durch einen stationären oder mobilen Roboter bewirkt wird oder aber manuell durch einen Bediener vorgenommen wird.

Eine weitere alternative Ausführungsform kann vorsehen, dass das Schubelement durch eine Drehung um eine senkrecht zur Transportfläche ausgebildeten Drehachse von der ersten Betriebsposition in die zweite Betriebsposition gebracht werden kann und vice versa. Bei dieser Ausführungsform kann es sinnvoll sein, wenn dies manuell durch einen Bediener durchgeführt wird, der das Schubelement aus dem Transportabschnitt entnimmt, dreht und neu wieder einsetzt. In diesem Fall entfällt zwar der Faktor des Zeitvorteils, jedoch müssen weniger Formatteile vorgehalten werden, da auch bei dieser Variante zwei oder mehr unterschiedliche Produktionsbetriebe mit nur einem einzigen Schubelement bedient werden können. Alternativ kann vorgesehen sein, dass ein stationärer oder mobiler Roboter vorgesehen ist, der die Drehung des Schubelements um die senkrecht zur Transportfläche ausgebildeten Drehachse vornimmt.

Der Roboter kann insbesondere Bestandteil des Transportabschnitts sein, oder der Roboter kann dem Transportabschnitt zumindest zeitweise zugeordnet sein. Der Roboter ist vorzugsweise dazu ausgebildet ist, die mindestens zwei unterschiedlichen Betriebspositionen des mindestens einen Schubelements einzustellen, insbesondere in Abhängigkeit von Informationen, welche Informationen durch eine Steuerungseinrichtung des Transportabschnitts oder durch eine dem Transportabschnitt zugeordnete bzw. mit dem Transportabschnitt wirkverbundene Steuerungseinrichtung vorgegeben sind.

Um unterschiedliche Artikel zu handhaben, ist gemäß einer Ausführungsform vorgesehen, dass die mindestens zwei unterschiedlichen Kontaktbereiche eines Schubelements eine unterschiedliche Profilierung aufweisen.

Beispielsweise kann die unterschiedliche Profilierung an unterschiedliche Artikelgrößen oder Artikeldurchmesser angepasst sein, so dass beispielsweise der erste Kontaktbereich eine Profilierung für erste Artikel mit einem ersten Durchmesser und der zweite Kontaktbereiche eine Profilierung für zweite Artikel mit einem geringeren zweiten Durchmesser aufweist.

Auch kann vorgesehen sein, dass beispielsweise der erste Kontaktbereich zur rückseitigen Anlage an Artikel ausgebildet ist, um die Artikel nachfolgend in eine sogenannte nested oder verschachtelte Anordnung zu bringen. Weiterhin kann der zweite Kontaktbereich zur rückseitigen Anlage an Artikel ausgebildet sein, welche Artikel sich in einer beabstandeten Anordnung befinden bzw. welche Artikel derart transportiert werden, dass nachfolgend keine nested-Anordnung (dichte Kugelpackung) ausgebildet wird.

Eine weitere Ausführungsform kann vorsehen, dass die unterschiedlichen Kontaktbereiche eines Schubelements zur rückseitigen Anlage an unterschiedlich geformte Artikel ausgebildet sind. Beispielsweise kann der erste Kontaktbereich zur rückseitigen Anlage an erste Artikel in Form von mit einer Griffmulde ausgestatteten Flaschen ausgebildet sein, während der zweite Kontaktbereich beispielsweise zur rückseitigen Anlage an zweite Artikel vorgesehen ist, welche zweiten Artikel eine zylindrische Form aufweisen und beispielsweise durch Dosen gebildet werden.

Eine weitere Ausführungsform kann vorsehen, dass die unterschiedlichen Kontaktbereiche eines Schubelements zur rückseitigen Anlage an die Artikel in jeweils unterschiedlichen Höhen oberhalb der Transportfläche ausgebildet sind.

Ein entsprechendes Schubelement umfasst einen ersten Kontaktbereich, der in der ersten Betriebsposition einen rückseitigen Anlagebereich für Artikel in einer ersten Höhe bereitstellt. Weiterhin umfasst das Schubelement einen zweiten Kontaktbereich und gegebenenfalls weitere Kontaktbereiche. Der zweite Kontaktbereich stellt in der zweiten Betriebsposition einen rückseitigen Anlagebereich für Artikel in einer von der ersten Höhe abweichenden zweiten Höhe bereit.

Mit einem solchen Schubelement können beispielsweise Artikel unterschiedlicher Höhen sicher durch den Transportabschnitt geführt werden. Greift das Schubelement beispielsweise im Griffmuldenbereich von Flaschen an, dann können beispielsweise mit einem derartigen Schubelement in der ersten Betriebsposition, bei welchem der erste Kontaktbereich in der ersten Höhe angeordnet ist, kleine 0,5l PET- Flaschen durch den Transportabschnitt bewegt werden. Befindet sich das Schubelement dagegen in der zweiten Betriebsposition, in welcher der zweite Kontaktbereich in einer größeren, zweiten Höhe zur rückseitigen Anlage an die Artikel bereitsteht, dann können beispielsweise größere 1,0l oder 1,5l PET- Flaschen sicher durch den Transportabschnitt bewegt werden.

Die in unterschiedlichen Höhen angeordneten Kontaktbereiche sind hierbei insbesondere an den jeweiligen Schwerpunkt der unterschiedlich großen bzw. unterschiedlich hohen Artikel angepasst.

Die Erfindung betrifft weiterhin ein Verfahren zum Transport von mindestens zwei nebeneinander angeordneten Artikeln in einer Transportrichtung. Hierbei werden die mindestens zwei nebeneinander angeordneten Artikel über mindestens ein Schubelement in einer Transportrichtung über eine Transportfläche bewegt. Das Schubelement liegt rückseitig an den mindestens zwei nebeneinander angeordneten Artikel an und schiebt diese somit in Transportrichtung.

Es ist vorgesehen, dass das Schubelement mindestens zwei unterschiedliche Kontaktbereiche für die Artikel umfasst, wobei einer der Kontaktbereiche bei dem Transport rückseitig an den Artikeln anliegt.

Welcher der mindestens zwei Kontaktbereiche hierbei rückseitig an den Artikeln anliegt, ist insbesondere von den jeweilig transportierten Artikeln abhängig.

Vorzugsweise ist vorgesehen, dass eine Steuerungseinrichtung das Schubelement in eine bestimmte Betriebsposition verbringt, in welcher Betriebsposition der jeweils mit einer Anlagefläche des Artikel korrespondierende Kontaktbereich des Schubelements den rückseitigen Anlagebereich für die Artikel ausbildet.

Gemäß einer Ausführungsform des erfindungsgemäßen Verfahrens erfolgt die Auswahl des an den Artikeln anliegenden Kontaktbereichs aufgrund von definierten Artikeleigenschaften. Insbesondere erfolgt die Auswahl des an den Artikeln anliegenden Kontaktbereichs aufgrund von Informationen zu Eigenschaften der Artikel, welche Informationen in einer Steuerungseinrichtung des Transportabschnitts oder in einer dem Transportabschnitt zugeordneten Steuerungseinrichtung abgespeichert sind oder welche Informationen von einer solchen Steuerungseinrichtung aus einer Datenbank abgerufen werden können.

Bei dem Verfahren kann vorgesehen sein, dass die Steuerungseinrichtung bei einer Produktionsumstellung die Einstellung des mindestens einen Schubelements ansteuert und eine Betriebsposition des Schubelements einstellt, wobei in einer ersten Betriebsposition ein erster Kontaktbereich den rückseitigen Anlagebereich für erste Artikel bildet und wobei in einer zweiten Betriebsposition ein zweiter Kontaktbereich den rückseitigen Anlagebereich für zweite Artikel bildet.

Alternativ oder zusätzlich kann das Verfahren vorsehen, dass die Steuerungseinrichtung das mindestens eine Schubelement im laufenden Produktionsbetrieb verstellt, so dass in einer ersten Betriebsposition ein erster Kontaktbereich den rückseitigen Anlagebereich für erste Artikel bildet und so dass in einer zweiten Betriebsposition ein zweiter Kontaktbereich den rückseitigen Anlagebereich für zweite Artikel bildet. Somit können unterschiedliche Artikel, beispielsweise Gebinde, im selben Produktionsdurchlauf durch unterschiedlich eingestellte Schubelemente durch den Transportabschnitt transportiert werden.

Vorzugsweise erfolgt die Einstellung der unterschiedlichen Betriebspositionen durch eine Drehung des Schubelements, wie bereits oben ausführlich beschrieben worden ist.

Der Vorteil des erfindungsgemäßen Transportabschnitts bzw. des erfindungsgemäßen Verfahrens bestehen darin, dass weniger Formatteile vorgehalten werden müssen, da jedes Schubelement in Abhängigkeit von einer jeweilig eingenommenen Betriebsposition mindestens zwei oder sogar mehrere unterschiedliche Artikelformate handhaben kann.

Der vorbeschriebene Transportabschnitt kann vorzugsweise Teil einer Getränkeverpackungsanlage sein. Eine solche Getränkeverpackungsanlage umfasst beispielsweise einen Nassteil mit einem Dosen und/oder Flaschenabschieber, einem Füllmodul und einem dem Füllmodul zugeordneten Verschließmodul sowie optional ein Etikettiermodul. Zwischen dem Füllmodul und dem Etikettiermodul oder anderen nachfolgenden Handhabungsmodulen kann ein Pasteur angeordnet sein.

Auch ist vorstellbar, dass die Getränkeverpackungsanlage beispielsweise ein Blasformmodul zur Herstellung von PET- Flaschen umfasst, welche nachfolgend befüllt, verschlossen und etikettiert werden.

Nachfolgend werden die in Dosen oder Flaschen abgefüllten Getränke in einer Verpackungsvorrichtung bzw. einem sogenannten Herstellungsmodul zu Verpackungseinheiten zusammengefasst bzw. es werden Stückgüter in Form von Gebinden erzeugt.

Beispielsweise werden mehrere Artikel zu Artikelgruppen zusammengestellt, welche mit einer Schrumpffolie umhüllt und durch Beaufschlagen mit einem Schrumpfmittel zu Schrumpfgebinden zusammengefasst werden.

Bei den Artikeln handelt es sich vorzugsweise um Getränkebehälter, insbesondere um Flaschen aus PET oder einem anderen geeigneten Kunststoff oder auch Glas. Bevorzugt können die Artikel auch durch Dosen aus Kunststoff, Glas und/oder Aluminium oder einem anderen Metall o.ä. gebildet sein.

Alternativ werden mehrere Artikel zu Artikelgruppen zusammengestellt, und mittels mindestens einer Umreifung zu Umreifungsgebinden zusammengefasst. Weiterhin kann vorgesehen sein, mehrere Artikel innerhalb einer Umverpackung anzuordnen, beispielsweise innerhalb eines Kartons, innerhalb eines Baskets, auf einem Tray oder ähnlichem. Stückgüter können beispielsweise auch durch Klebegebinde gebildet werden oder durch mit einem oberen Verpackungszuschnitt zusammengefassten Artikelgruppen. Auch einzelne Artikel können Stückgüter bilden, beispielsweise können auch einzelne Getränkebehälter, Dosen, Flaschen o.ä. jeweils Stückgüter darstellen.

Die Verpackungseinheiten werden nachfolgend in einem als Gruppiermodul bzw. Lagenbildungsmodul ausgebildeten Handhabungsmodul o.ä. zu palettierfähigen Lagen zusammengestellt, welche in einer Palettiervorrichtung auf Paletten gestapelt werden.

Innerhalb der Getränkeverpackungsanlage werden die Artikel und Verpackungseinheiten bzw. Stückgüter über geeignete Transportsysteme, welche ggfl. mit geeigneten Puffersystemen ausgestattet sind, von einem Handhabungsmodul zum nächsten befördert. Insbesondere werden die Artikel innerhalb der Getränkeverpackungsanlage abschnittsweise über einen erfindungsgemäßen Transportabschnitt bewegt.

Die Komponenten der Getränkeverpackungsanlage sind nur beispielhaft zu verstehen. Andere Konfigurationen umfassend einen im Rahmen der Anmeldung beschriebenen Transportabschnitt sollen ebenfalls von der Anmeldung umfasst sein.

Es sei an dieser Stelle ausdrücklich erwähnt, dass alle Aspekte und Ausführungsvarianten, die im Zusammenhang mit der erfindungsgemäßen Vorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Vorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Vorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Vorrichtung.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine erste Ausführungsform eines erfindungsgemäßen Transportabschnitts.
Fig. 2 zeigt eine erste Betriebsposition eines Schubelements des Transportabschnitts gemäß Fig. 1.
Fig. 3 zeigt eine zweite Betriebsposition des Schubelements des Transportabschnitts gemäß Fig. 1.
Fig. 4 zeigt einen Querschnitt durch ein als Schubstange ausgebildetes Schubelement mit zwei Kontaktbereichen.
Fig. 5 zeigt einen Querschnitt durch ein als Schubstange ausgebildetes Schubelement mit drei Kontaktbereichen.
Fig. 6 zeigt einen Querschnitt durch ein als Schubstange ausgebildetes Schubelement mit vier Kontaktbereichen.
Fig. 7 zeigt eine zweite Ausführungsform eines Transportabschnitts mit in einer ersten Betriebsposition angeordnetem Schubelement.
Fig. 8 zeigt den Transportabschnitt mit dem in einer zweiten Betriebsposition angeordneten Schubelement gemäß Fig. 7.
Fig. 9 zeigt eine dritte Ausführungsform eines Transportabschnitts mit in einer ersten Betriebsposition angeordnetem Schubelement.
Fig. 10 zeigt den Transportabschnitt mit dem in einer zweiten Betriebsposition angeordneten Schubelement gemäß Fig. 9.
Fig. 11 zeigt eine vierte Ausführungsform eines Transportabschnitts.

Für gleiche oder gleich wirkende Elemente der Erfindung werden in der Regel jeweils gleiche Bezugsziffern verwendet. Ferner werden der Übersicht halber in manchen Fällen nur solche Bezugsziffern in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

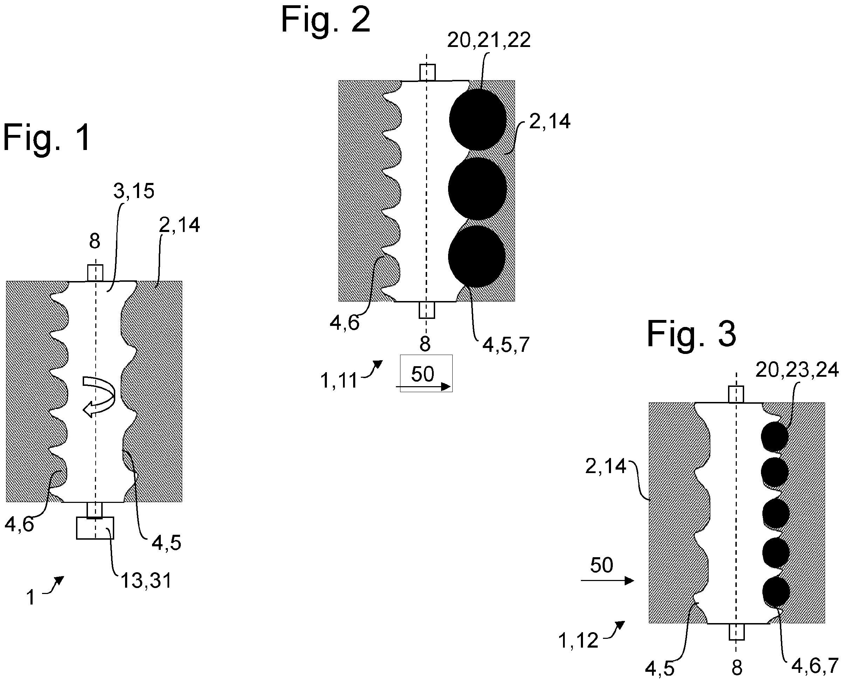

Die stark schematisierte Darstellung der Fig. 1 zeigt eine erste Ausführungsform eines erfindungsgemäßen Transportabschnitts 1. Die ebenfalls stark schematisierte Darstellung der Fig. 2 zeigt eine erste Betriebsposition 11 eines als Schubstange 3 ausgebildeten Schubelements 15 des Transportabschnitts 1 gemäß Fig. 1.

Die wiederum stark schematisierte Darstellung der und Fig. 3 zeigt eine zweite Betriebsposition 12 der Schubstange 3 des Transportabschnitts 1 gemäß Fig. 1.

Der Transportabschnitt 1 dient dem Transport von mindestens nebeneinander angeordneten Artikeln 20 (vgl. Figuren 2 und 3) in einer Transportrichtung 50.

Der Transportabschnitt 1 umfasst eine Transportfläche 2 und mindestens eine Schubstange 3, welche Schubstange 3 zur rückseitigen Anlage an die mindestens zwei nebeneinander angeordneten Artikel 20 und zur Bewegung der mindestens zwei nebeneinander angeordneten Artikel 20 in Transportrichtung 50 ausgebildet ist.

Die Transportfläche 2 wird beispielsweise durch eine Überschubplatte 14 gebildet, auf welcher die Artikel 20 vermittels des Schubelements 15 in Transportrichtung 50 angeschoben und gleitend bewegt werden.

Hierbei ist vorgesehen, dass die Schubstange 3 mindestens zwei unterschiedliche Kontaktbereiche 4 für die Artikel 20 umfasst. Der erste Kontaktbereich 5 ist für erste Artikel 21 vorgesehen, insbesondere für erste Artikel 21 mit einem ersten Durchmesser 22. Der zweite Kontaktbereich 6 ist für zweite Artikel 23 vorgesehen, insbesondere für zweite Artikel 23 mit einem zweiten Durchmesser 24.

Die Fig. 2 zeigt eine erste Betriebsposition 11 der Schubstange 3 des Transportabschnitts 1, wobei in der ersten Betriebsposition 11 der erste Kontaktbereich 5 der Schubstange 3 dem zweiten Kontaktbereich 6 in Transportrichtung 50 vorauslaufend angeordnet ist. In diesem Fall bildet der erste Kontaktbereich 5 einen rückseitigen Anlagebereich 7 für erste Artikel 21 ausbildet.

Die Fig. 3 zeigt eine zweite Betriebsposition 12 der Schubstange 3 des Transportabschnitts 1, wobei in der zweiten Betriebsposition 12 der zweite Kontaktbereich 6 der Schubstange 3 dem ersten Kontaktbereich 5 in Transportrichtung 50 vorauslaufend angeordnet ist. In diesem Fall bildet der zweite Kontaktbereich 6 einen rückseitigen Anlagebereich 7 für zweite Artikel 23 aus.

Bei der in den Figuren 1 bis 3 dargestellten Ausführungsform eines Transportabschnitts 1 ist vorgesehen, dass die Schubstange eine Längsachse 8 aufweist und um die Längsachse 8 drehbar gelagert ausgebildet ist, was in Fig. 1 durch den eine Drehung andeutenden Richtungspfeil dargestellt ist.

Durch Drehung der Schubstange 3 um die Längsachse 8 kann die Schubstange 3 von der ersten Betriebsposition 11 gemäß den Figuren 1 und 2 in die zweite Betriebsposition 12 gemäß Fig. 3 gebracht werden und vice versa.

Umfasst die Schubstange 2 zwei unterschiedlich ausgebildete Kontaktbereiche 4, so ist insbesondere vorgesehen, dass die Schubstange 3 durch eine 180-Grad-Drehung von der ersten Betriebsposition 11 in die zweite Betriebsposition 12 gebracht werden kann und vice versa.

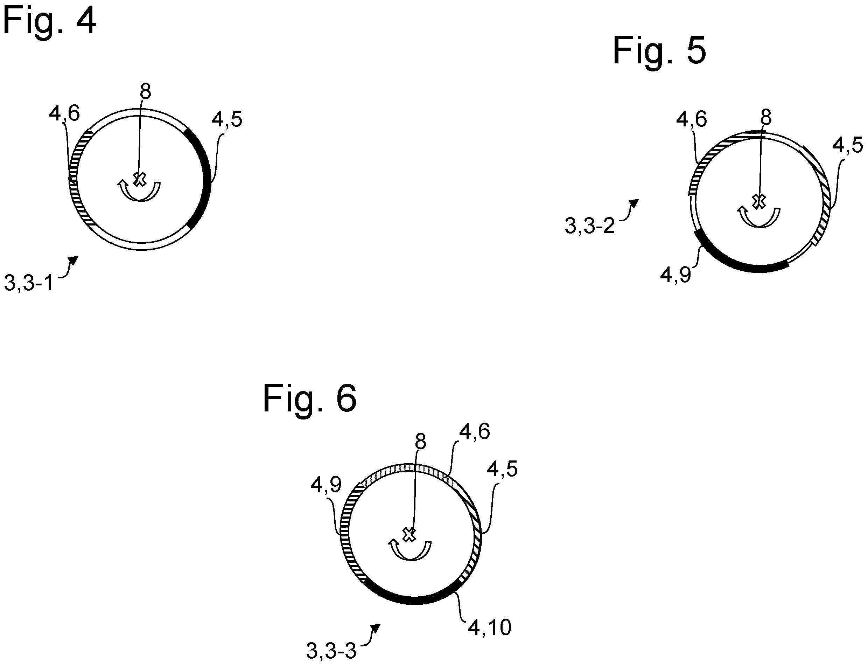

Die schematische Darstellung der Fig. 4 zeigt einen Querschnitt durch eine Schubstange 3-1, welche wie die in den Figuren 1 bis 3 dargestellte Ausführungsform zwei Kontaktbereiche 4 aufweist, nämlich insbesondere einen ersten Kontaktbereich 5 und einen zweiten Kontaktbereich 6. Durch eine um die Längsachse 8 vorgenommene Drehung um (circa) 180° kann die Schubstange 3-1 in die zwei unterschiedlichen Betriebspositionen 11, 12 (vgl. Figuren 2 und 3) gebracht werden.

Die schematische Darstellung der Fig. 5 zeigt einen Querschnitt durch eine Schubstange 3-2 mit drei unterschiedlichen Kontaktbereichen 4, insbesondere mit einem ersten Kontaktbereich 5, einem zweiten Kontaktbereich 6 und einem dritten Kontaktbereich 9. Durch eine um die Längsachse 8 vorgenommene Drehung um jeweils (circa) 120° kann die Schubstange 3-2 in drei unterschiedlichen Betriebspositionen gebracht werden.

Die schematische Darstellung der Fig. 6 zeigt einen Querschnitt durch eine Schubstange 3-3 mit vier Kontaktbereichen 4, insbesondere mit einem ersten Kontaktbereich 5, einem zweiten Kontaktbereich 6, einem dritten Kontaktbereich 9 und einem vierten Kontaktbereich 10. Durch eine um die Längsachse 8 vorgenommene Drehung um jeweils (circa) 90° kann die Schubstange 3-3 in vier unterschiedlichen Betriebspositionen gebracht werden.

Eine Ausführungsform kann vorsehen, dass die Drehung der Schubstange 3 durch einen Antrieb 13 bewirkt wird, welcher Antrieb 13 beispielsweise durch einen an der als Drehachse ausgebildeten Längsachse 8 der Schubstange 3 angeordneten Servormotor 31 gebildet wird, was in Fig. 1 beispielhaft dargestellt ist.

Als solcher Servomotor 31 eignet sich insbesondere ein elektromotorischer Direktantrieb, was jedoch andere Antriebe, die der Fachmann je nach Zweckmäßigkeit auswählen wird, nicht ausschließt, bspw. einen hydraulischen Direktantrieb oder auch Antriebe mit Getrieben oder Zugmittelüber- oder -untersetzungen etc.

Eine weitere Ausführungsform kann vorsehen, dass die Drehung der Schubstange 3 um die Längsachse 8 durch einen mobilen oder stationären Roboter (nicht dargestellt) bewirkt wird.

Eine weitere, nicht dargestellte Ausführungsform kann vorsehen, dass die Schubstange 3 durch eine Drehung um eine senkrecht zur Transportfläche 3 ausgebildeten Drehachse 8 in die unterschiedlichen Betriebspositionen gebracht werden kann. Bei dieser Ausführungsform kann es sinnvoll sein, wenn dies manuell durch eine Person durchgeführt wird, welche die Schubstange 3 aus dem Transportabschnitt 1 entnimmt, dreht und in dieser gedrehten Position wieder einsetzt. In diesem Fall entfällt zwar der Faktor des Zeitvorteils, jedoch müssen weniger Formatteile vorgehalten werden, da auch bei dieser Variante zwei oder mehr unterschiedliche Produktionsbetriebe mit nur einem einzigen Schubelement bedient werden können.

Alternativ kann vorgesehen sein, dass die Drehung der Schubstange 3 um die senkrecht zur Transportfläche 3 ausgebildeten Drehachse 8 durch einen mobilen oder stationären Roboter (nicht dargestellt) bewirkt wird.

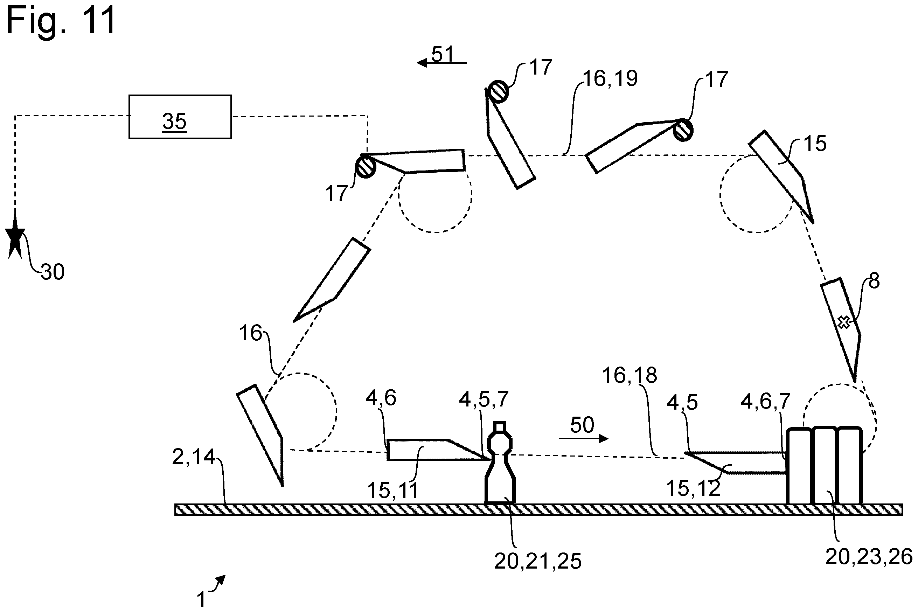

Der Roboter kann somit Bestandteil des Transportabschnitts 1 sein, oder der Roboter kann dem Transportabschnitt 1 zumindest zeitweise zugeordnet sein. Der Roboter ist vorzugsweise dazu ausgebildet ist, die mindestens zwei unterschiedlichen Betriebspositionen des mindestens einen Schubelements einzustellen, insbesondere in Abhängigkeit von Informationen, welche Informationen durch eine Steuerungseinrichtung des Transportabschnitts (nicht dargestellt, vgl. Fig. 11) oder durch eine dem Transportabschnitt zugeordnete Steuerungseinrichtung vorgegeben sind.

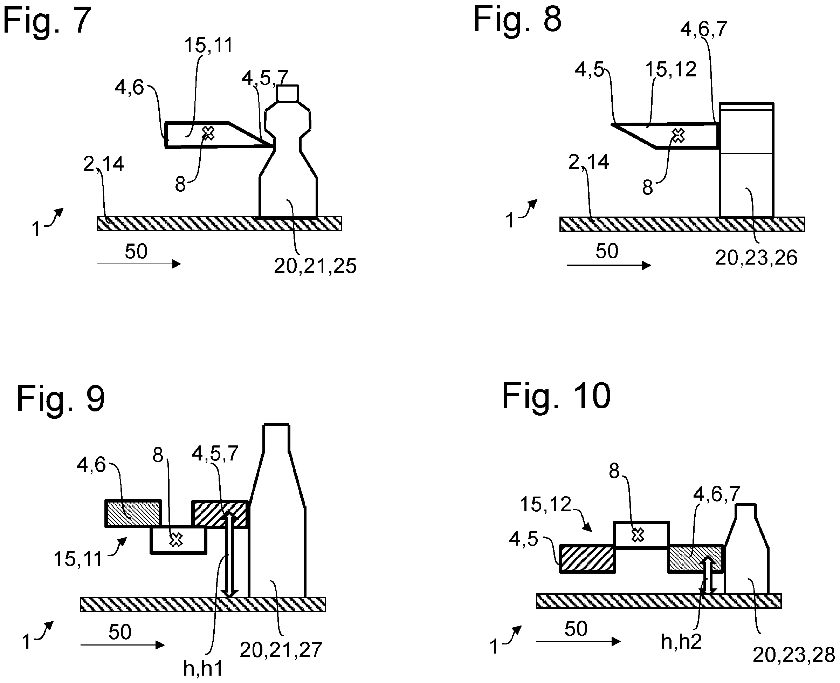

Die schematische Seitenansicht der Fig. 7 zeigt eine zweite Ausführungsform eines Transportabschnitts 1 mit einem in einer ersten Betriebsposition 11 angeordnetem Schubelement 15. Die schematische Seitenansicht der Fig. 8 zeigt den Transportabschnitt 1 mit dem in einer zweiten Betriebsposition 12 angeordneten Schubelement 15 gemäß Fig. 7.

Die Figuren 7 und 8 verdeutlichen, dass die unterschiedlichen Kontaktbereiche 5 und 6 auch derart ausgebildet sein können, dass nicht nur Artikel 20 mit über ihrer Längserstreckungsrichtung unterschiedlichen Durchmessern vermittels eines geeigneten Schubelements 15 in der jeweiligen Betriebsposition 11 oder 12 gehandhabt werden können, sondern auch Artikel 20 mit unterschiedlichen Formen. Beispielsweise ist der erste Kontaktbereich 5 im dargestellten Ausführungsbeispiel für erste Artikel 21 in Form von mit Griffmulde ausgestatteten Flaschen 25 vorgesehen (vgl. Fig. 7), während der zweite Kontaktbereich 6 für zweite Artikel 23 vorgesehen sein, welche zweiten Artikel 23 eine zylindrische Form aufweisen und beispielsweise durch Dosen 26 gebildet werden (vgl. Fig. 8).

Wie im Zusammenhang mit den Figuren 2 und 3 beschrieben, wird auch in diesem Fall das Schubelement 15 vorzugsweise durch eine Drehung um seine Längsachse 8 von der in Fig. 7 dargestellten ersten Betriebsposition 11 in die in Fig. 8 dargestellte zweite Betriebsposition 12 überführt und vice versa.

Die schematische Seitenansicht der Fig. 9 zeigt eine dritte Ausführungsform eines Transportabschnitts 1 mit einem in einer ersten Betriebsposition 11 angeordneten Schubelement 15. Die schematische Seitenansicht der Fig. 10 zeigt den Transportabschnitt 1 mit dem in einer zweiten Betriebsposition 12 angeordneten Schubelement gemäß Fig. 9.

Bei dem hier dargestellten dritten Ausführungsbeispiel (Figuren 9 und 10) sind die Kontaktbereiche 5 und 6 derart ausgebildet, dass der jeweilig den rückseitigen Anlagebereich 7 bildende Kontaktbereich 5, 6 in unterschiedlichen Höhen h oberhalb der Transportfläche 2 angeordnet ist.

Beispielsweise stellt der erste Kontaktbereich 5 in der ersten Betriebsposition 11 den rückseitigen Anlagebereich 7 in einer ersten Höhe h1 bereit, so dass mit dem Schubelement 15 in der ersten Betriebsposition 11 insbesondere erste Artikel 21 gehandhabt werden können, welche ersten Artikel 21 eine erste Höhe 27 aufweisen. Weiterhin stellt der zweite Kontaktbereich 6 in der zweiten Betriebsposition 12 den rückseitigen Anlagebereich 7 in einer zweiten Höhe h2 bereit, so dass mit dem Schubelement 15 in der zweiten Betriebsposition 12 insbesondere zweite Artikel 23 gehandhabt werden können, welche zweiten Artikel 23 eine zweite Höhe 28 aufweisen.

Wie im Zusammenhang mit den Figuren 2 und 3 beschrieben, wird das Schubelement 15 vorzugsweise durch eine Drehung um seine Längsachse 8 von der in Fig. 9 dargestellten ersten Betriebsposition 11 in die in Fig. 10 dargestellte zweite Betriebsposition 12 überführt und vice versa.

Die schematische Seitenansicht der Fig. 11 zeigt eine vierte Ausführungsform eines Transportabschnitts 1, bei welcher Schubelemente 15 über mindestens ein Anschlagelement 17 verstellt und dadurch in die verschiedenen Betriebspositionen 11, 12 überführt werden können.

Mehrere Schubelemente 15 sind beispielsweise zwischen zwei umlaufenden parallelen Zugmitteln, gebildet bspw. durch umlaufende Antriebsketten 16, angeordnet. Die im Bereich des Untertrums 18 angeordneten Schubelemente 15 liegen jeweils rückseitig an Artikeln 20 an und bewegen diese somit in Transportrichtung 50.

Die Verstellung der Schubelemente 15 erfolgt vorzugsweise bei der Rückführung der Schubelemente 15; insbesondere erfolgt die Verstellung der Schubelemente 15 im Bereich des Obertrums 19 der Antriebsketten 16.

Die Anschlagelemente 17 sind dazu ausgebildet, die Schubelemente 15 um ihre Längsachse 8 zu verdrehen und diese dadurch von einer ersten Betriebsposition 11 in eine zweite Betriebsposition 12 zu überführen oder vice versa. In Fig. 11 ist beispielhaft die Verstellung eines Schubelements 15 vermittels eines sich in Gegenrichtung 51 zur Transportrichtung 50 mit dem Schubelement 15 mitbeweglich ausgebildeten Anschlagelements 17 dargestellt.

Für den Fachmann ist klar, dass vorzugsweise jeweils mehrere Schubelemente 15 zwischen den Antriebsketten 16 angeordnet sind.

Vorzugsweise ist vorgesehen, dass die Anschlagelemente 17 zustellbar ausgebildet sind und somit nur an den jeweiligen Schubelementen 15 angreifen, wenn im Rahmen des laufenden Produktionsbetriebs unterschiedliche Artikel 20 zu bearbeiten sind und somit ein Austausch der Kontaktbereiche notwendig ist.

In Fig. 11 ist beispielhaft dargestellt, dass mit einem Schubelement 15 in zweiter Betriebsposition 12 eine Gruppe von sechs in zwei Dreiherreihen angeordneten zweiten Artikeln 23 in Transportrichtung 50 bewegt werden. Bei den zweiten Artikeln 23 kann es sich beispielsweise um Dosen 26 handeln. Vorzugsweise sind die Dosen 26 vermittels einer Umverpackung (nicht dargestellt), beispielsweise einer Umreifung, einem als Greifkarton ausgebildeten oberen Verpackungszuschnitt, einer Schrumpffolie o.ä. zusammengefasst.

Dagegen werden mit einem Schubelement 15 in erster Betriebsposition 11 zwei nebeneinander angeordnete erste Artikel 21 in Transportrichtung 50 bewegt. Bei den ersten Artikeln 21 handelt es sich beispielsweise um mit Griffmulde ausgestattete Flaschen 25. Vorzugsweise sind die Flaschen 25 vermittels einer Umverpackung (nicht dargestellt), beispielsweise einer Umreifung, einem als Greifkarton ausgebildeten oberen Verpackungszuschnitt, o.ä. zusammengefasst.

Durch das Überführen der Schubelemente 15 in die unterschiedlichen Betriebspositionen 11, 12 können unterschiedliche Artikel 20 nacheinander bearbeitet werden, ohne dass ein Produktionsstopp aufgrund eines Formatteilwechsels notwendig ist. Dadurch ist ein sehr flexibler Produktionsmodus möglich, da die Artikel 20 nicht mehr in regelmäßigen Abfolgen den Transportabschnitt 1 durchlaufen müssen, sondern da nunmehr flexibel auf Änderungen in der Abfolge der Artikel 20 reagiert werden kann.

Beispielsweise kann vorgesehen sein, dass dem Transportabschnitt 1 ein Sensor 30 für die ankommenden Artikel 20 vorgeordnet ist. Die durch den Sensor 30 ermittelten Daten zu den Artikeln 20 werden an eine mit dem Transportabschnitt 1 wirkverbundene Steuerungseinrichtung 35 übermittelt, die die Daten auswertet und bei einer Änderung der zugeführten Artikel 20 bzw. Produkte mindestens ein Anschlagelement 17 ansteuert, um das entsprechende Schubelement 15 in die benötigte Betriebsposition 11 oder 12 zu verbringen.

Ein abschließender Hinweis sei an dieser Stelle zu den Beschreibungen von Ausführungsvarianten der Erfindung gegeben, wobei diese Beschreibungspassagen jeweils auf die beigefügten Zeichnungen Bezug nehmen. Wenn im Zusammenhang der Figuren und deren Beschreibungen generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung hinsichtlich der Ausgestaltung des Transportabschnittes 1, der Schubelemente 3 und ihrer Kontaktbereiche 4, 5, 6 sowie deren Zusammenwirkung erleichtern, ohne dass er etwa aus den gezeichneten und möglicherweise nicht exakt maßstabsgerechten Größenverhältnissen in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der erfindungsgemäßen Vorrichtung, d.h. des Transportabschnittes 1, der Schubelemente 3 und ihrer Kontaktbereiche 4, 5, 6 sowie deren Zusammenwirkung, ein besseres Verständnis für den in den Ansprüchen sowie im allgemeinen Teil der Beschreibung allgemeiner und/oder abstrakter formulierten Erfindungsgedanken abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

1 Transportabschnitt
2 Transportfläche
3,3-1,3-2,3-3 Schubstange
4 Kontaktbereich
5 erster Kontaktbereich
6 zweiter Kontaktbereich
7 rückseitiger Anlagebereich
8 Längsachse
9 dritter Kontaktbereich
10 vierter Kontaktbereich
11 erste Betriebsposition
12 zweite Betriebsposition
13 Antrieb
14 Überschubplatte
15 Schubelement
16 Antriebskette für Schubelemente
17 Anschlagelement
18 Untertrum
19 Obertrum
20 Artikel
21 erste Artikel
22 erster Durchmesser
23 zweite Artikel
24 zweiter Durchmesser
25 mit Griffmulde ausgestattete Flasche
26 Dose
27 erste Höhe
28 zweite Höhe
30 Sensor
31 Servormotor
35 Steuerungseinrichtung
50 Transportrichtung
51 Gegenrichtung zur Transportrichtung
h Höhe
h1 erste Höhe
h2 zweite Höhe

## Patentansprüche

1. Transportabschnitt (1) zum Transport von mindestens zwei nebeneinander angeordneten Artikeln (20) in einer Transportrichtung (50),
der Transportabschnitt (1) umfassend eine Transportfläche (2) und mindestens ein Schubelement (15),
welches Schubelement (15) zur rückseitigen Anlage an die mindestens zwei nebeneinander angeordneten Artikel (20) und zur Bewegung der mindestens zwei nebeneinander angeordneten Artikel (20) in Transportrichtung (50) ausgebildet ist, und
welches Schubelement (15) mindestens zwei unterschiedliche Kontaktbereiche (4) für die Artikel (20) umfasst.

2. Transportabschnitt (1) nach Anspruch 1, wobei in einer ersten Betriebsposition (11) ein erster Kontaktbereich (5) des Schubelements (15) den rückseitigen Anlagebereich (7) für erste Artikel (20) bildet und wobei in einer zweiten Betriebsposition (12) ein zweiter Kontaktbereich (6) den rückseitigen Anlagebereich (7) für zweite Artikel (20) bildet.

3. Transportabschnitt (1) nach Anspruch 2, wobei das Schubelement (15) eine Längsachse (8) aufweist und um die Längsachse (8) drehbar gelagert ausgebildet ist,
wobei das Schubelement (15) durch eine Drehung um seine Längsachse (8) von der ersten Betriebsposition (11) in die zweite Betriebsposition (12) bringbar ist, oder
wobei das Schubelement (15) durch eine Drehung um seine Längsachse (8) von der zweiten Betriebsposition (12) in die erste Betriebsposition (11) bringbar ist.

4. Transportabschnitt (1) nach Anspruch 3, wobei der Transportabschnitt (1) mindestens ein Anschlagelement (17) umfasst, welches mindestens eine Anschlagelement (17) dazu ausgebildet ist, die Drehung des Schubelements (15) zu bewirken, insbesondere welches mindestens eine Anschlagelement (17) zustellbar ausgebildet ist.

5. Transportabschnitt (1) nach Anspruch 3, wobei dem Schubelement (15) ein Antrieb (13) zugeordnet ist, welcher Antrieb (13) dazu ausgebildet ist, die Drehung des Schubelements (15) zu bewirken.

6. Transportabschnitt (1) nach Anspruch 2, wobei das Schubelement (15) durch eine Drehung um eine senkrecht zur Transportfläche (2) ausgebildeten Drehachse von der ersten Betriebsposition (11) in die zweite Betriebsposition (12) bringbar ist, oder wobei das Schubelement (15) durch eine Drehung um eine senkrecht zur Transportfläche (2) ausgebildeten Drehachse von der zweiten Betriebsposition (12) in die erste Betriebsposition (11) bringbar ist.

7. Transportabschnitt (1) nach einem der Ansprüche 2 bis 6, wobei der erste Kontaktbereich (5) in der ersten Betriebsposition (11) in einer ersten Höhe (h1) oberhalb der Transportfläche (2) angeordnet ist und wobei der zweite Kontaktbereich (6) in der zweiten Betriebsposition (12) in einer zweiten Höhe (h2) oberhalb der Transportfläche (2) angeordnet ist, wobei sich die zweite Höhe (h2) von der ersten Höhe (h1) unterscheidet.

8. Transportabschnitt (1) nach einem der voranstehenden Ansprüche, wobei die mindestens zwei Kontaktbereiche (4) jeweils unterschiedliche Profilierungen aufweisen.

9. Transportabschnitt (1) nach einem der Ansprüche 2 bis 8, wobei der Transportabschnitt (1) einen Roboter umfasst oder wobei dem Transportabschnitt (1) ein Roboter zugeordnet ist, welcher Roboter dazu ausgebildet ist, die mindestens zwei unterschiedlichen Betriebspositionen (11, 12) des Schubelements (15) einzustellen, insbesondere in Abhängigkeit von Informationen, welche Informationen durch eine Steuerungseinrichtung (35) des Transportabschnitts oder durch eine dem Transportabschnitt (1) zugeordnete Steuerungseinrichtung (35) vorgegeben sind.

10. Verfahren zum Transport von mindestens zwei nebeneinander angeordneten Artikeln (20) in einer Transportrichtung (50),
wobei die mindestens zwei nebeneinander angeordneten Artikel (20) über mindestens ein Schubelement (15) in einer Transportrichtung (50) über eine Transportfläche (2) bewegt werden,
wobei das Schubelement (15) rückseitig an den mindestens zwei nebeneinander angeordneten Artikel (20) anliegt,
wobei das Schubelement (15) mindestens zwei unterschiedliche Kontaktbereiche (4) für die Artikel (20) umfasst und
wobei jeweils einer der Kontaktbereiche (4) bei dem Transport rückseitig an den Artikeln (20) anliegt.

11. Verfahren nach Anspruch 10, wobei die Auswahl des an den Artikeln (20) anliegenden Kontaktbereichs (4) aufgrund von Artikeleigenschaften erfolgt, insbesondere aufgrund von Informationen zu Eigenschaften der Artikel (20), welche Informationen in einer Steuerungseinrichtung (35) des Transportabschnitts oder in einer mit dem Transportabschnitt (1) wirkverbundene Steuerungseinrichtung (35) abgespeichert sind oder von einer solchen Steuerungseinrichtung (35) aus einer Datenbank abgerufen werden können.

12. Verfahren nach einem der Ansprüche 10 oder 11, wobei das Schubelement (15) bei einer Produktionsumstellung oder im laufenden Produktionsbetrieb verstellt wird,
woraus folgend in einer ersten Betriebsposition (11) ein erster Kontaktbereich (5) den rückseitigen Anlagebereich (7) für die Artikel (20) bildet, und
woraus zudem folgend in einer zweiten Betriebsposition (12) ein zweiter Kontaktbereich (6) den rückseitigen Anlagebereich (7) für die Artikel (20) bildet.

13. Verfahren nach Anspruch 12, wobei das Schubelement (15) eine Längsachse (8) aufweist und drehbar gelagert ausgebildet ist, wobei das Schubelement (15) durch eine Drehung um seine Längsachse (8) von der ersten Betriebsposition (11) in die zweite Betriebsposition (12) gebracht wird oder wobei das Schubelement (15) durch eine Drehung um seine Längsachse (8) von der zweiten Betriebsposition (12) in die erste Betriebsposition (11) gebracht wird, oder
wobei das Schubelement (15) durch Zustellung eines Anschlagelements um seine Längsachse (8) gedreht und dabei von der ersten Betriebsposition (11) in die zweite Betriebsposition (12) oder von der zweiten Betriebsposition (12) in die erste Betriebsposition (11) gebracht wird.

14. Verfahren nach Anspruch 12, wobei das Schubelement (15) um eine senkrecht zur Transportfläche (2) ausgebildeten Drehachse gedreht und dadurch von der ersten Betriebsposition (11) in die zweite Betriebsposition (12) oder von der zweiten Betriebsposition (12) in die erste Betriebsposition (11) gebracht wird.

15. Verfahren nach einem der Ansprüche 12 bis 14, wobei die Einstellung der mindestens zwei unterschiedlichen Betriebspositionen (11, 12) durch einen Roboter des Transportabschnitts (1) oder durch einen dem Transportabschnitt (1) zugeordneten Roboter vorgenommen wird.
